# EUROPEAN PATENT SPECIFICATION

(11) **EP 4 233 635 B1**
(45) Date of publication and mention of the grant of the patent: **18.09.2024**
(21) Application number: 22213697.0
(22) Date of filing: 15.12.2022
(51) Int. Cl.: A45D 33/00

(54) **COSMETIC CONTAINER WITH PALLET EASILY DETACHABLE THEREFROM**
KOSMETIKBEHÄLTER MIT LEICHT VON DIESEM ABNEHMBARER PALETTE
RÉCIPIENT POUR PRODUIT COSMÉTIQUE AVEC PALETTE FACILEMENT DÉTACHABLE DE CELUI-CI

(30) Priority: 28.02.2022 KR 20220025678
(43) Date of publication of application: 30.08.2023
(73) Proprietor: CTK Co., Ltd., Seoul 06709 (KR)
(72) Inventor: CHUNG, In Yong, 06544 Seoul (KR); LEE, Won Eui, 08362 Seoul (KR); UM, In Young, 02077 Seoul (KR); KANG, Kyung Ho, 16689 Suwon-si, Gyeonggi-do (KR)
(74) Representative: M. Zardi & Co S.A.

(56) References cited:
- EP-A1- 3 207 818
- EP-A1- 3 427 611
- EP-A1- 3 434 140
- GB-A- 2 511 820
- KR-Y1- 200 372 921

## Description

### BACKGROUND OF THE INVENTION

### Field of the Invention

The present invention relates to a cosmetic container with a pallet easily detachable therefrom, and more specifically, to a cosmetic container with a pallet easily detachable therefrom that is capable of having elastic control pieces facingly formed on both side walls of the pallet and elastic control grooves facingly formed on the inner surfaces of the side walls of a container body with a mounting space open on the underside thereof, so that in a packaging line, in a state where a cap is closed with respect to the container body, the container body can be directly pressurized against the pallet filled with cosmetic materials, thereby completing the packaging process of the cosmetic container, and if it is desired to replace the pallet with a refill pallet, the elastic control pieces are artificially released elastically from the coupled states to the underside of the container body, thereby optimizing the packaging conveniences of a product and ensuring easy replacement of the pallet with the refill pallet.

### Background of the Related Art

In the case of a conventional cosmetic container with a pallet, generally, the pallet is coupled to top of a container body.

In the case of the conventional cosmetic container, accordingly, if a product is received in a state where a cap of the cosmetic container is closed with respect to the container body, the cap is open to fill the pallet with cosmetic materials, and otherwise, after dishes filled with the cosmetic materials are bonded to the pallet, the cap is closed with respect to the container body, so that packaging work is inconvenient and a toll processing cost is increased.

Further, upon the packaging of the product, the dishes filled with the cosmetic materials are bonded to the pallet by means of a double-sided tape, an adhesive, or a hot-melt adhesive, and accordingly, the pallet cannot be replaced with a refill pallet, thereby causing environmental problems such as the waste of resources, environmental pollution, and the like.

Moreover, the dishes are fixedly bonded integrally to the pallet, thereby making it hard to separately collect the dishes and needing additional labor, time, and cost for the separate collection.

To solve such problems, a compact refill container detachable mounting structure is disclosed in Korean Patent No. KR200372921 Y1, but according to the conventional compact refill container detachable mounting structure, a detachable piece is formed only on one side of a storage dish, while a long protrusion is being formed on the other side of the storage dish and locked onto a support protrusion of an accommodation hole of a container body, so that the storage dish is detachable from the accommodation hole of the container body only in a downward direction of the accommodation hole, and further, after one side long protrusion is first locked onto the support projection of the accommodation hole, the other side detachable piece is elastically pushed and fitted or elastically operates to thus couple or separate the storage dish to or from the container body, thereby causing many inconveniences. In the case of the above-mentioned conventional technology, moreover, if a refill container is received in a state where a cap is closed with respect to the container body, it is impossible to directly couple the container body to the storage dish, and thus, the storage dish is always coupled to the container body on the bottom of the accommodation hole. Accordingly, the storage dish is first coupled to the accommodation hole of the container body, and next, the cap is open with respect to the container body. After that, a cosmetic material is filled in the storage dish, and the cap is closed with respect to the container body, thereby completing the packaging process. As a result, it is very inconvenient that the cosmetic material is filled in the storage dish or the product is packaged, and because of the addition of the coupling and packaging processes of the product, further, the time required for packaging work is also increased. EP3427611A1 discloses a refill container using double injection, comprising: a refill container for containing a cosmetic material, wherein the refill container is formed of a synthetic resin or a metallic material and has an impregnation member in which the cosmetic material is impregnated; a refill container holder which is coupled to the top of the refill container; and a refill container cover which is opened and closed by being hinge-coupled to the refill container holder, wherein the refill container holder is formed by doubly injecting or insert-injecting a packing part of an elastic material therein, the top of the refill container and the packing part are coupled when the refill container and the refill container holder are coupled.

### SUMMARY OF THE INVENTION

Accordingly, the present invention has been made in view of the above-mentioned problems occurring in the related art, and it is an object of the present invention to provide a cosmetic container with a pallet easily detachable therefrom that is capable of having elastic control pieces facingly formed on both side walls of the pallet and elastic control grooves facingly formed on the inner surfaces of the side walls of a container body with a mounting space open on the underside thereof, so that in a packaging line, in a state where a cap is closed with respect to the container body, the container body can be directly pressurized against the pallet filled with cosmetic materials, thereby completing the packaging process of the cosmetic container, and if it is desired to replace the pallet with a refill pallet, the elastic control pieces are artificially released elastically from the coupled states to the underside of the container body, thereby optimizing the packaging conveniences of a product and ensuring easy replacement of the pallet with the refill pallet.

To accomplish the above-mentioned objects, according to the present invention, there is provided a cosmetic container including: a container body having a compartment frame formed on top thereof to provide one or more compartmented exposed spaces and a mounting space open downward; a cap openable and closable with respect to the container body by means of a hinge disposed on one side thereof; and a pallet coupled or separated to or from the mounting space of the container body and having one or more compartmented cosmetic material filling spaces filled with cosmetic materials and having a plurality of side walls, wherein the pallet has elastic control pieces facingly disposed on two side walls facing each other among the side walls of the pallet, and the container body has elastic control grooves facingly formed on the inner surfaces of the side walls thereof correspondingly to the elastic control pieces, so that in a state where the cap is closed, the container body is directly pressurized against the pallet to allow the mounting space open downward to be coupled to the pallet, and as the elastic control pieces are elastically released from the coupled states thereof with an artificial force, the pallet is separable from the mounting space of the container body and replaced with a refill pallet, characterized in that the elastic control pieces comprise elastic support pieces spaced apart from both side facing walls of the pallet and having freely extending bottom ends in a vertical direction, elastic locking projections protruding from the outer peripheral surfaces of the elastic support pieces, and inclined support surfaces formed on tops of the elastic locking projections, and the elastic control grooves are adapted to allow the elastic locking projections to be elastically locked and unlocked thereon and therefrom and have initial inclined entry portions with inclined surfaces corresponding to the inclined support surfaces formed on tops of the elastic locking projections, so that the mounting space of the container body is directly pressurized against top of the pallet, and otherwise, when the pallet is pushed and fitted to the open underside of the mounting space, the inclined support surfaces formed on tops of the elastic locking projections slide along the initial inclined entry portions and come into contact with the elastic control grooves, thereby allowing the elastic control pieces to be elastically locked onto the elastic control grooves.

According to the present invention the elastic control pieces include elastic support pieces spaced apart from both side facing walls of the pallet and having freely extending bottom ends in a vertical direction, elastic locking projections protruding from the outer peripheral surfaces of the elastic support pieces, and inclined support surfaces formed on tops of the elastic locking projections, and the elastic control grooves may be adapted to allow the elastic locking projections to be elastically locked and unlocked thereon and therefrom and have initial inclined entry portions with inclined surfaces corresponding to the inclined support surfaces formed on tops of the elastic locking projections, so that the mounting space of the container body is directly pressurized against top of the pallet, and otherwise, when the pallet is pushed and fitted to the open underside of the mounting space, the inclined support surfaces formed on tops of the elastic locking projections slide along the initial inclined entry portions and come into contact with the elastic control grooves, thereby allowing the elastic control pieces to be elastically locked onto the elastic control grooves.

According to the present invention, desirably, cosmetic materials, which may be filled in the cosmetic material filling spaces of the pallet, may be filled directly or in dishes separately prepared.

According to the present invention, desirably, the cosmetic material filling spaces of the pallet may be formed correspondingly to the exposed spaces formed on the compartment frame of the container body.

According to the present invention, desirably, the pallet may have locking edges extending outward from the outer sides of the underside thereof, and the container body may have base stepped projections formed stepped inward by the thicknesses of the locking edges on the inner surfaces of the open underside of the mounting space to insertedly seat the locking edges thereonto.

According to the present invention, desirably, the areas of the cosmetic material filling spaces of the pallet may be larger than the areas of the exposed spaces of the container body, so that the edges of the cosmetic materials accommodated in the cosmetic material filling spaces or tops of the dishes for filling the cosmetic materials may be locked onto the underside of the compartment frame of the container body and thus naturally prevented from escaping upward.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a perspective view showing a cosmetic container according to the present invention, to which a pallet is coupled;
FIG. 2 is a perspective view showing the cosmetic container according to the present invention, from which the pallet is separated;
FIGs. 3 and 4 are perspective views showing a state where a cap is open after the pallet has been separated from the cosmetic container according to the present invention;
FIG. 5 is a sectional view taken along the line 5A-5A of FIG. 1 ;
FIG. 6 is a sectional view showing a state before a container body is coupled to the pallet in the cosmetic container according to the present invention;
FIG. 7 is a sectional view showing the pallet in the cosmetic container according to the present invention;
FIG. 8 is a sectional view showing a state where cosmetic materials are directly filled in cosmetic material filling spaces of the pallet in FIG. 7;
FIG. 9 is a sectional view showing a state where dishes in which the cosmetic materials are filled are accommodated in the cosmetic material filling spaces of the pallet in FIG. 7;
FIG. 10 is a sectional view taken along the line 10A-10A of FIG. 1;
FIG. 11 is a sectional views showing a state where the cap is open in FIG. 10;
FIG. 12 is a perspective view showing an example where one or more exposed spaces are formed in the cosmetic container according to the present invention; and
FIG. 13 is a perspective view showing an example where a hinge is formed integrally with the cosmetic container according to the present invention.

### DETAILED DESCRIPTION OF THE PREFERRED EMBODIMENTS

Hereinafter, embodiments of the present invention will be explained in detail with reference to the attached drawings.

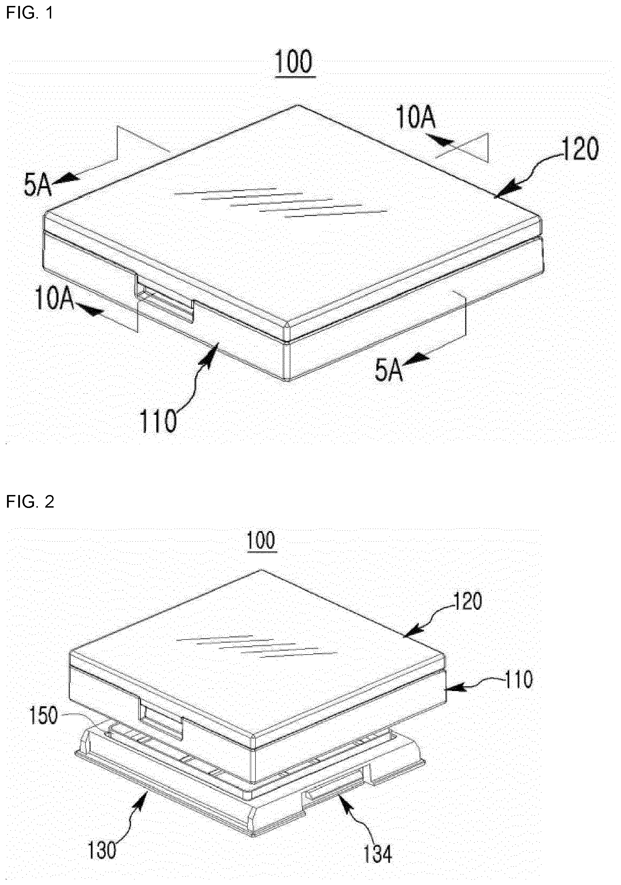

Referring to FIGs. 1 to 7, a cosmetic container 100 with a pallet 130 replaceable on the underside thereof includes: a container body 110 having a compartment frame 114 formed on top thereof to provide one or more compartmented exposed spaces 112 and a mounting space 116 open downward; a cap 120 openable and closable with respect to the container body 110 by means of a hinge 122 disposed on one side thereof; and the pallet 130 coupled or separated to or from the mounting space 116 of the container body 110 and having one or more compartmented cosmetic material filling spaces 132 filled with cosmetic materials 140, wherein the pallet 130 has elastic control pieces 134 facingly disposed on both side walls thereof, and the container body 110 has elastic control grooves 118 facingly formed on the inner surfaces of the side walls thereof correspondingly to the elastic control pieces 134, so that in a state where the cap 120 is closed, the container body 110 is directly pressurized against the pallet 130 to allow the mounting space 116 open downward to be coupled to the pallet 130, and as the elastic control pieces 134 elastically operate with an artificial force, the pallet 130 is separable from the mounting space 116 of the container body 110, thereby enabling the pallet 130 to be replaced with a refill pallet very conveniently.

The hinge 122, which serves to allow the cap 120 to be open and closed with respect to the container body 110, may have various shapes.

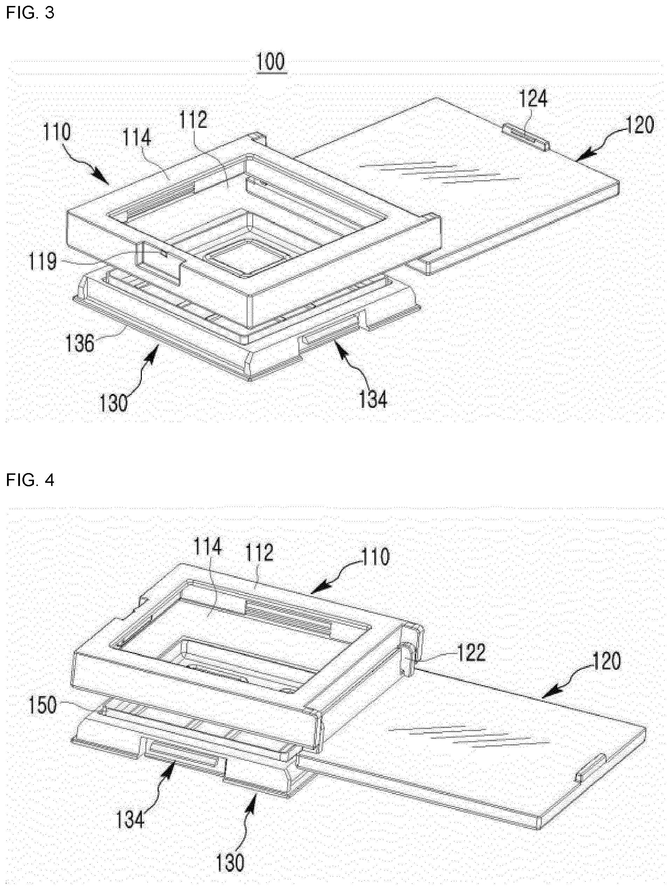

For example, as shown in FIGs. 4, 10, and 11, an injection pin is used as the hinge 122. In the case where the injection pin is used as the hinge 122, the injection pin is not made of a metal material, unlike conventional practices, and accordingly, the injection pin as the hinge 122 is separately collected, without any inconvenience. Further, the injection pin is eco-friendly, and even if it is thrown away, no environmental pollution occurs.

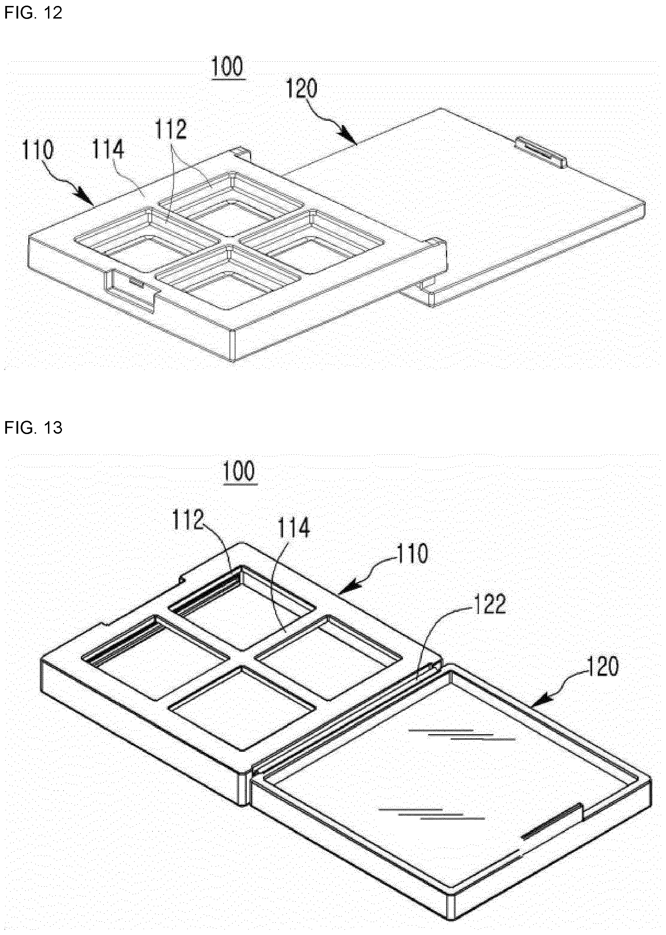

Further, as shown in FIG. 13, the hinge 122 is formed integrally with the container body 110 and the cap 120. In this case, the hinge 122 is made of the same material as the container body 110 and the cap 120 and integrally formed with them by means of injection molding.

If the hinge 122 is formed integrally with the container body 110 and the cap 120, it is possible that the hinge 122 is made as a single injection molded product together with the container body 110 and the cap 120, thereby reducing a mold manufacturing cost, requiring no coupling among them, and remarkably lowering a manufacturing cost of a product.

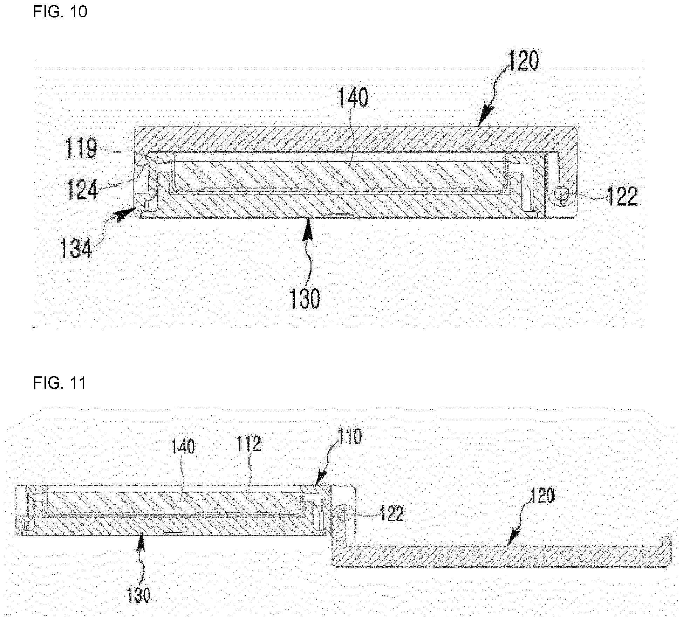

As shown in FIGs. 3 and 10, further, the cap 120, which is open and closed with respect to the container body 110, is prevented from being arbitrarily open by means of the interlocking between locking projections 119 and 124 formed correspondingly to each other on the container body 110 and the cap 120.

The locking projections 119 and 124 may be freely replaced with other components only if they have the same functions as the locking projections 119 and 124.

According to the present invention, the elastic control pieces 134 include elastic support pieces 134a spaced apart from both side facing walls of the pallet 130 and having freely extending bottom ends in a vertical direction, elastic locking projections 134b protruding from the outer peripheral surfaces of the elastic support pieces 134a, and inclined support surfaces 134c formed on tops of the elastic locking projections 134b, and the elastic control grooves 118 are adapted to allow the elastic locking projections 134b to be elastically locked and unlocked thereon and therefrom and include initial inclined entry portions 118a with inclined surfaces corresponding to the inclined support surfaces 134c formed on tops of the elastic locking projections 134b, so that the mounting space 116 of the container body 110 is directly pressurized against top of the pallet 130, and otherwise, when the pallet 130 is pushed and fitted to the open underside of the mounting space 116, the inclined support surfaces 134c formed on tops of the elastic locking projections 134b stably slide along the initial inclined entry portions 118a and come into contact with the elastic control grooves 118, thereby allowing the elastic control pieces 134 to be elastically locked onto the elastic control grooves 118.

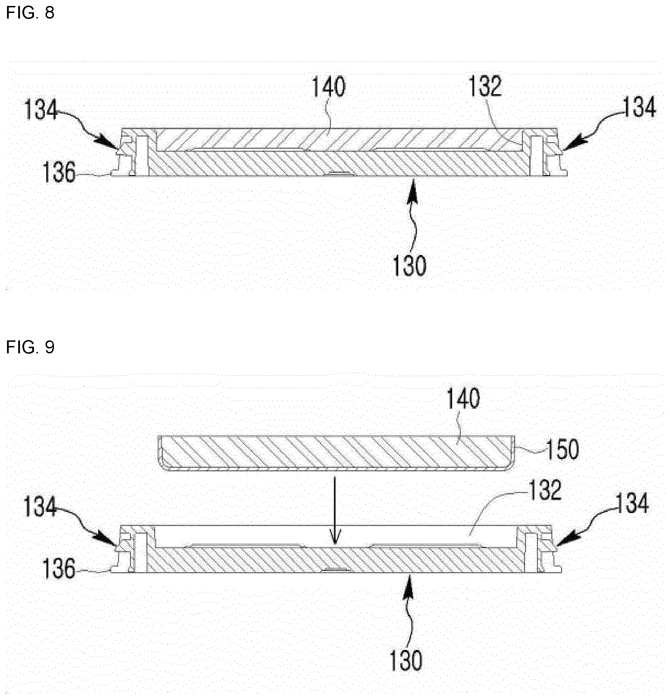

According to the present invention, further, the cosmetic materials 140, which are filled in the cosmetic material filling spaces 132 of the pallet 130, are directly filled, as shown in FIG. 8, and otherwise, the cosmetic materials 140 are filled in dishes 150 separately prepared so that the dishes 150 are accommodated in the cosmetic material filling spaces 132.

In the case where the cosmetic materials 140 are accommodated after filled in the dishes 150, the dishes 150 are made of the same material as the pallet 130 or a recyclable synthetic resin or metal, thereby providing advantages of separate collection or recycling.

According to the present invention, as shown in FIG. 12, the one or more cosmetic material filling spaces 132 compartmented on top of the pallet 130 are formed correspondingly to the exposed spaces 112 formed on the compartment frame 114 of the container body 110, and otherwise, they may have various shapes.

Accordingly, the cosmetic material filling spaces 132 are exposed to the outside through the exposed spaces 112 of the container body 110 and do not cause any interference when the cosmetic materials 140 are used, so that in a state where the cap 120 of the container body 110 is open, it is possible that the cosmetic materials 140 are applied to a makeup tool through the exposed spaces 112.

According to the present invention, the pallet 130 has locking edges 136 extending outward from the outer sides of the underside thereof, and the container body 110 has base stepped projections 117 formed on the inner surfaces of the open underside of the mounting space 116 to insertedly seat the locking edges 136 thereonto, so that when the pallet 130 is coupled to the mounting space 116 of the container body 110, the locking edges 136 are stably fitted to the base stepped projections 117.

When the pallet 130 is coupled to the mounting space 116 of the container body 110, the locking edges 136 are supportedly seated onto the base stepped projections 117, thereby making the coupled state maintained stably.

According to the present invention, further, the areas of the cosmetic material filling spaces 132 of the pallet 130 are larger than those of the exposed spaces 112 of the container body 110, so that the edges of the cosmetic materials 140 accommodated in the cosmetic material filling spaces 132 or tops of the dishes 150 for filling the cosmetic materials 140 are locked onto the underside of the compartment frame 114 of the container body 110 and thus prevented from escaping upward.

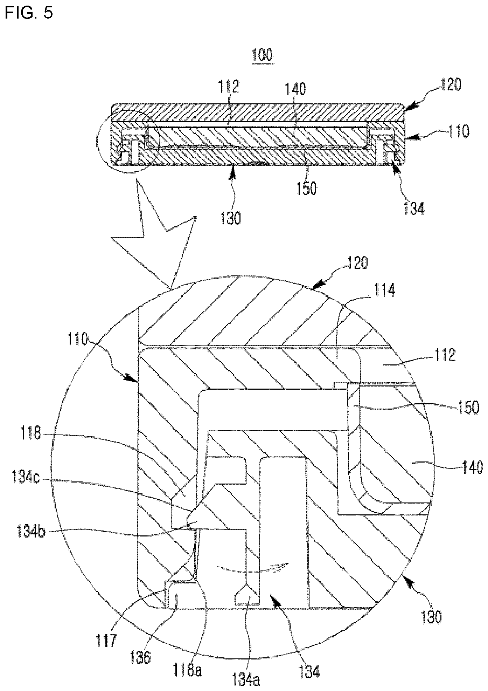

Under the above-mentioned configuration, if the cosmetic materials 140 are accommodated in the cosmetic material filling spaces 132 of the pallet 130, especially in the state of being filled in the dishes 150, the tops of the dishes 150 are locked onto the underside of the compartment frame 140, as shown in FIG. 5, and thus prevented from escaping upward. Accordingly, the dishes 150 are stably accommodatedly supported against the container body 110, even without any bonding to the bottoms of the cosmetic material filling spaces 132 by means of the adhesive in the conventional practice, thereby causing no environmental pollution and requiring no separate coupling process using the adhesive.

Moreover, the dishes 150 are accommodatedly supported against the cosmetic material filling spaces 132 of the pallet 130, without any separate attaching means, so that after the cosmetic materials 140 are consumed up, the pallet 130 and the dishes 150 are quickly and easily separately collected from the container body 110.

Now, an explanation of the coupled state of the pallet 130 filled with the cosmetic materials 140 to the mounting space 116 formed on the container body 110 in the cosmetic container 100 according to the present invention will be given.

According to the present invention, the mounting space 116 of the container body 110 is open downward. Accordingly, if necessary, it is possible to push the pallet 130 under the mounting space 116 toward the mounting space 116 and thus fit the pallet 130 to the mounting space 116, but according to the present invention, basically, it is desirable that the container body 110 is directly pressurized against the pallet 130 and coupled to the pallet 130.

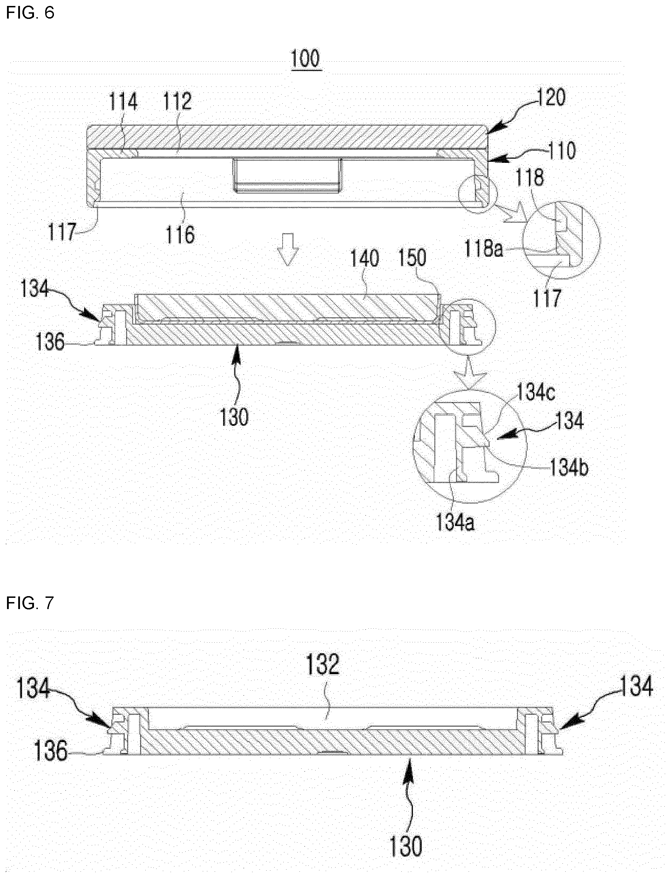

In specific, the mounting space 116 is open downward with respect to the container body 110, and accordingly, the cosmetic materials 140 are first filled in the cosmetic material filling spaces 132 of the pallet 130, or the dishes 150 filled with the cosmetic materials 140 are accommodated in the cosmetic material filling spaces 132 of the pallet 130. In this case, as shown in FIG. 6, in the state where the cap 120 is closed with respect to the container body 110, the container body 110 is directly pressurized against the pallet 130 to allow the pallet 130 to be coupled to the mounting space 116 open downward.

In the case where the container body 110 is directly pressurized against the pallet 130, the initial inclined entry portions 118a of the elastic control grooves 118 come into contact with the inclined support surfaces 134c formed on tops of the elastic locking projections 134b protruding from the elastic support pieces 134a of the elastic control pieces 134 and thus move to be forcedly pressurized inwardly. Simultaneously, the elastic locking projections 134b protruding from the elastic support pieces 134a, while moving over the initial inclined entry portions 118a, are elastically locked onto the elastic control grooves 118.

According to the present invention, the mounting space 116 is open downward with respect to the container body 110, and accordingly, even if the container body 110 is provided in the state where the cap 120 is closed with respect to the container body 110, the container body 110 is directly pressurized against the pallet 130 and coupled to the pallet 130 in the state where the cap 120 is not open, so that the packaging work of the pallet 130 can be performed quickly, easily, and conveniently. Further, the pallet 130, which is coupled to the interior of the mounting space 116, is forcedly elastically locked onto the mounting space 116 by means of the elastic control pieces 134 and the elastic control grooves 118, so that unless the elastic control pieces 134 are artificially released from their locked state, they can be kept elastically locked onto the elastic control grooves 118.

In the case where the cosmetic materials 140 filled in the pallet 130 coupled to the mounting space 116 of the container body 110 are used to apply makeup, as shown in FIG. 11, the cap 120 is open, and next, the cosmetic materials 140, which are exposed to the outside through the exposed spaces 114 of the compartment frame 114, are applied appropriately to the makeup tool.

If the cosmetic materials 140 filled in the pallet 130 are consumed up, the pallet 130 has to be replaced with a refill pallet, and in this case, the elastic support pieces 134a of the elastic control pieces 134 exposed to the outside are pressurized inward (in the direction of an arrow of the enlarged portion of FIG. 5) to allow the elastic locking projections 134b to be released from the locked states onto the elastic control grooves 118, so that the pallet 130 is separated from the mounting space 116 of the container body 110 and thus replaced with the refill pallet.

In this case, even if any one of the elastic support pieces 134a of the elastic control pieces 134 or both of them are pressurized inward, the pallet 130 is separated from the mounting space 116 of the container body 110 and thus replaced with the refill pallet.

According to the present invention, the container body 110 and the cap 120 are used permanently, and only the pallet 130 is replaced with the refill pallet, thereby having some advantages of the reduction of waste parts through recycling, the prevention of waste of resources, the enhancement of reuse or recycling rate of the resources, and the suppression of environmental pollution. Further, consumers purchase only the pallets, thereby having economical advantages of the reduction of cosmetic product purchasing costs.

In the case where the dishes 150 filled with the cosmetic materials 140 are accommodated in the cosmetic material filling spaces 132 of the pallet 130, it is possible that if necessary, only the dishes 150 are replaced with new ones, and in this case, it is possible to permanently use the pallet 130, thereby greatly improving the recycling rate of the resource.

As described above, the cosmetic container according to the present invention has the elastic control pieces facingly formed on both side walls of the pallet and the elastic control grooves facingly formed on the corresponding inner surfaces of the side walls of the container body with the mounting space open on the underside thereof, so that in the packaging line, even in the state where the cap coupled to the container body is not open, the container body can be directly pressurized against the pallet filled with the cosmetic materials to thus couple the pallet to the mounting space, thereby ensuring high assemblability of the product and the improvement in the coupling process of the product, and the elastic control pieces artificially operate elastically from the underside of the container body, thereby ensuring the quick, easy, and simple replacement of the pallet with the refill pallet.

Moreover, even if the dishes filled with the cosmetic materials are accommodated in the pallet, they are not bonded to the pallet using the adhesive, so that the dishes can be separately collected after the cosmetic container has been used up, thereby enhancing the recycling or reusable rate of the resources and providing eco-friendly effectiveness such as reduction of environmental pollution.

While the present invention has been described with reference to the particular illustrative embodiments, it is not to be restricted by the embodiments but only by the appended claims. It is to be appreciated that those skilled in the art can change or modify the embodiments without departing from the scope of the present invention, as defined by the appended claims.

## Claims

1. A cosmetic container comprising:
a container body (110) having a compartment frame (114) formed on top thereof to provide one or more compartmented exposed spaces (112) and a mounting space (116) open downward;
a cap (120) openable and closable with respect to the container body (110) by means of a hinge (122) disposed on one side thereof; and
a pallet (130) coupled or separated to or from the mounting space (116) of the container body (110) and having one or more compartmented cosmetic material filling spaces (132) filled with cosmetic materials (140) and having a plurality of side walls,
wherein the pallet (130) has elastic control pieces (134) facingly disposed on two side walls facing each other among the side walls of the pallet (130), and the container body (110) has elastic control grooves (118) facingly formed on the inner surfaces of the side walls thereof correspondingly to the elastic control pieces (134), so that in a state where the cap (120) is closed, the container body (110) is directly pressurized against the pallet (130) to allow the mounting space (116) open downward to be coupled to the pallet (130), and as the elastic control pieces (134) are elastically released from the coupled states thereof with an artificial force, the pallet (130) is separable from the mounting space (116) of the container body (110) and replaced with a refill pallet,
**characterized in that** the elastic control pieces (134) comprise elastic support pieces (134a) spaced apart from both side facing walls of the pallet (130) and having freely extending bottom ends in a vertical direction, elastic locking projections (134b) protruding from the outer peripheral surfaces of the elastic support pieces (134a), and inclined support surfaces (134c) formed on tops of the elastic locking projections (134b), and the elastic control grooves (118) are adapted to allow the elastic locking projections (134b) to be elastically locked and unlocked thereon and therefrom and have initial inclined entry portions (118a) with inclined surfaces corresponding to the inclined support surfaces (134c) formed on tops of the elastic locking projections (134b), so that the mounting space (116) of the container body (110) is directly pressurized against top of the pallet (130), and otherwise, when the pallet (130) is pushed and fitted to the open underside of the mounting space (116), the inclined support surfaces (134c) formed on tops of the elastic locking projections (134b) slide along the initial inclined entry portions (118a) and come into contact with the elastic control grooves (118), thereby allowing the elastic control pieces (134) to be elastically locked onto the elastic control grooves (118).

2. The cosmetic container according to claim 1, wherein the cosmetic materials (140), which are filled in the cosmetic material filling spaces (132) of the pallet (130), are filled directly or in dishes (150) separately prepared.

3. The cosmetic container according to claim 1, wherein the cosmetic material filling spaces (132) of the pallet (130) are formed correspondingly to the exposed spaces (112) formed on the compartment frame (114) of the container body (110).

4. The cosmetic container according to claim 1, wherein the pallet (130) has locking edges (136) extending outward from the outer sides of the underside thereof, and the container body (110) has base stepped projections (117) formed stepped inward by thethicknesses of the locking edges (136) on the inner surfaces of the open underside of the mounting space (116) to insertedly seat the locking edges (136) thereonto.

5. The cosmetic container according to claim 1, wherein the areas of the cosmetic material filling spaces (132) of the pallet (130) are larger than the areas of the exposed spaces (112) of the container body (110), so that the edges of the cosmetic materials (140) accommodated in the cosmetic material filling spaces (132) or tops of the dishes (150) for filling the cosmetic materials (140) are locked onto the underside of the compartment frame (114) of the container body (110) and thus prevented from escaping upward.

## Patentansprüche

1. Kosmetikbehälter, umfassend:
einen Behälterkörper (110), der einen Fachrahmen (114) aufweist, der an dessen Oberseite ausgebildet ist, um einen oder mehrere unterteilte exponierte Räume (112) und einen nach unten offenen Montageraum (116) bereitzustellen;
einen Deckel (120), der in Bezug auf den Behälterkörper (110) mittels eines Scharniers (122), das an einer Seite desselben angeordnet ist, öffenbar und schließbar ist; und
eine Palette (130), die mit dem Montageraum (116) des Behälterkörpers (110) gekoppelt oder von diesem getrennt ist und einen oder mehrere unterteilte, mit Kosmetikmaterialien (140) gefüllte Kosmetikmaterial-Füllräume (132) aufweist und eine Vielzahl von Seitenwänden aufweist,
wobei die Palette (130) elastische Steuerteile (134) aufweist, die an zwei Seitenwänden, die einander unter den Seitenwänden der Palette (130) zugewandt sind, angeordnet sind, und der Behälterkörper (110) elastische Steuernuten (118) aufweist, die an den inneren Oberflächen seiner Seitenwände entsprechend den elastischen Steuerteilen (134) zugewandt ausgebildet sind, so dass in einem Zustand, in dem der Deckel (120) geschlossen ist, der Behälterkörper (110) direkt gegen die Palette (130) unter Druck gesetzt ist, um zu ermöglichen, dass sich der Montageraum (116) nach unten öffnet, um mit der Palette (130) gekoppelt zu werden, und wenn die elastischen Steuerteile (134) mit einer künstlichen Kraft aus ihren gekoppelten Zuständen gelöst werden, die Palette (130) von dem Montageraum (116) des Behälterkörpers (110) trennbar ist und durch eine Nachfüllpalette ersetzt wird,
**dadurch gekennzeichnet, dass** die elastischen Steuerteile (134) elastische Stützteile (134a) umfassen, die von beiden seitenzugewandten Wänden der Palette (130) beabstandet sind und sich frei in vertikaler Richtung erstreckende untere Enden, elastische Verriegelungsvorsprünge (134b), die von den äußeren Umfangsflächen der elastischen Stützteile (134a) vorstehen und geneigte Stützflächen (134c) aufweisen, die an Oberseiten der elastischen Verriegelungsvorsprünge (134b) ausgebildet sind, und die elastischen Steuernuten (118) dazu ausgelegt sind, das elastische Verriegeln und Entriegeln der elastischen Verriegelungsvorsprünge (134b) an ihnen und von ihnen zu erlauben, und anfängliche geneigte Eingangsabschnitte (118a) mit geneigten Oberflächen aufweisen, die den geneigten Stützflächen (134c) entsprechen, die an Oberseiten der elastischen Verriegelungsvorsprünge (134b) ausgebildet sind, so dass der Montageraum (116) des Behälterkörpers (110) direkt gegen die Oberseite der Palette (130) unter Druck gesetzt ist, und andernfalls, wenn die Palette (130) an die offene Unterseite des Montageraums (116) geschoben und eingepasst wird, die geneigten Stützflächen (134c), die an Oberseiten der elastischen Verriegelungsvorsprünge (134b) ausgebildet sind, entlang der anfänglichen geneigten Eingangsabschnitte (118a) gleiten und mit den elastischen Steuernuten (118) in Kontakt kommen, wodurch es erlaubt wird, dass die elastischen Steuerteile (134) elastisch an den elastischen Steuernuten (118) verriegelt werden.

2. Kosmetikbehälter nach Anspruch 1, wobei die Kosmetikmaterialien (140), die in die Kosmetikmaterial-Füllräume (132) der Palette (130) gefüllt sind, direkt oder in separat vorbereitete Schalen (150) gefüllt sind.

3. Kosmetikbehälter nach Anspruch 1, wobei die Kosmetikmaterial-Füllräume (132) der Palette (130) entsprechend den exponierten Räumen (112) ausgebildet sind, die am Fachrahmen (114) des Behälterkörpers (110) ausgebildet sind.

4. Kosmetikbehälter nach Anspruch 1, wobei die Palette (130) Verriegelungsränder (136) aufweist, die sich von den Außenseiten ihrer Unterseite nach außen erstrecken, und der Behälterkörper (110) gestufte Basisvorsprünge (117) aufweist, die durch die Dicken der Verriegelungsränder (136) an den inneren Oberflächen der offenen Unterseite des Montageraums (116) nach innen gestuft ausgebildet sind, um die Verriegelungsränder (136) darauf einsetzend zu platzieren.

5. Kosmetikbehälter nach Anspruch 1, wobei die Bereiche der Kosmetikmaterial-Füllräume (132) der Palette (130) größer sind als die Bereiche der exponierten Räume (112) des Behälterkörpers (110), so dass die Ränder der in den Kosmetikmaterial-Füllräumen (132) aufgenommenen Kosmetikmaterialien (140) oder Oberseiten der Schalen (150) zum Einfüllen der Kosmetikmaterialien (140) an der Unterseite des Fachrahmens (114) des Behälterkörpers (110) verriegelt sind und somit am Entweichen nach oben gehindert werden.

## Revendications

1. Contenant pour cosmétiques comprenant :
un corps (110) de contenant présentant un cadre de compartiment (114) formé sur le sommet de celui-ci pour fournir un ou plusieurs espaces exposés (112) compartimentés et un espace de montage (116) ouvert vers le bas ;
un couvercle (120) pouvant être ouvert et fermé par rapport au corps (110) de contenant au moyen d'une charnière (122) disposée sur un côté de celui-ci ; et
une palette (130) couplée à ou séparée de l'espace de montage (116) du corps (110) de contenant et présentant un ou plusieurs espaces de remplissage (132) de produits cosmétiques compartimentés remplis avec des produits cosmétiques (140) et présentant une pluralité de parois latérales,
dans lequel la palette (130) présente des pièces de commande élastiques (134) disposées en regard sur deux parois latérales se faisant face parmi les parois latérales de la palette (130), et le corps (110) de contenant présente des rainures de commande élastiques (118) formées en regard sur les surfaces internes des parois latérales de celui-ci de manière correspondante aux pièces de commande élastiques (134), de sorte que dans un état dans lequel le couvercle (120) est fermé, le corps (110) de contenant soit directement comprimé contre la palette (130) pour permettre à l'espace de montage (116) de s'ouvrir vers le bas pour être couplé à la palette (130), et lorsque les pièces de commande élastiques (134) sont libérées élastiquement des états couplés de celles-ci par une force artificielle, la palette (130) est séparable de l'espace de montage (116) du corps (110) de contenant et remplacée par une palette de recharge,
**caractérisé en ce que** les pièces de commande élastiques (134) comprennent des pièces de support élastiques (134a) espacées des deux parois latérales en regard de la palette (130) et présentant des extrémités inférieures s'étendant librement dans une direction verticale, des saillies de verrouillage élastiques (134b) faisant saillie depuis les surfaces périphériques externes des pièces de support élastiques (134a) et des surfaces de support inclinées (134c) formées sur des sommets des saillies de verrouillage élastiques (134b), et les rainures de commande élastiques (118) sont conçues pour permettre aux saillies de verrouillage élastiques (134b) d'être verrouillées et déverrouillées élastiquement sur celles-ci et de celles-ci et présentent des parties d'entrée inclinée initiale (118a) avec des surfaces inclinées correspondant aux surfaces de support inclinées (134c) formées sur les sommets des saillies de verrouillage élastiques (134b), de sorte que l'espace de montage (116) du corps (110) de contenant soit directement comprimé contre un sommet de la palette (130), et autrement, lorsque la palette (130) est poussée vers et installée sur la face inférieure ouverte de l'espace de montage (116), les surfaces de support inclinées (134c) formées sur des sommets des saillies de verrouillage élastiques (134b) coulissent le long des parties d'entrée inclinées initiales (118a) et viennent en contact avec les rainures de commande élastiques (118), permettant ainsi aux pièces de commande élastiques (134) d'être verrouillées élastiquement sur les rainures de commande élastiques (118).

2. Contenant pour cosmétiques selon la revendication 1, dans lequel les produits cosmétiques (140), qui sont remplis dans les espaces de remplissage (132) de produits cosmétiques de la palette (130), sont remplis directement ou dans des récipients (150) préparés séparément.

3. Contenant pour cosmétiques selon la revendication 1, dans lequel les espaces de remplissage (132) de produits cosmétiques de la palette (130) sont formés de manière correspondante aux espaces exposés (112) formés sur le cadre de compartiment (114) du corps (110) de contenant.

4. Contenant pour cosmétiques selon la revendication 1, dans lequel la palette (130) présente des bords de verrouillage (136) s'étendant vers l'extérieur depuis les côtés externes de la face inférieure de celle-ci, et le corps (110) de contenant présente des saillies de base en escalier (117) formées en escalier vers l'intérieur par les épaisseurs des bords de verrouillage (136) sur les surfaces internes de la face inférieure ouverte de l'espace de montage (116) pour caler par insertion les bords de verrouillage (136) sur celles-ci.

5. Contenant pour cosmétiques selon la revendication 1, dans lequel les zones des espaces de remplissage (132) de produits cosmétiques de la palette (130) sont plus grandes que les zones des espaces exposés (112) du corps (110) de contenant, de sorte que les bords des produits cosmétiques (140) logés dans les espaces de remplissage (132) de produits cosmétiques ou des sommets des récipients (150) pour remplir les produits cosmétiques (140) sont verrouillés sur la face inférieure du cadre de compartiment (114) du corps (110) de contenant et ne puissent ainsi pas sortir vers le haut.
